# FASCICULE DE BREVET EUROPEEN

(11) **EP 3 495 825 B1**
(45) Date de publication et mention de la délivrance du brevet: **11.11.2020**
(21) Numéro de dépôt: 18211047.8
(22) Date de dépôt: 07.12.2018
(51) Int. Cl.: G01P 3/489, G01P 3/488, G01P 3/487, G01P 3/486

(54) **DISPOSITIF DE MESURE DES VITESSES DE ROTATION D'AU MOINS DEUX ROUES D'UN ATTERRISSEUR D'AERONEF**
MESSVORRICHTUNG DER DREHGESCHWINDIGKEITEN VON MINDESTENS ZWEI RÄDERN EINES LUFTFAHRZEUGFAHRWERKS
DEVICE FOR MEASURING THE ROTATION SPEEDS OF AT LEAST TWO WHEELS OF AN AIRCRAFT LANDING GEAR

(30) Priorité: 08.12.2017 FR 1761874
(43) Date de publication de la demande: 12.06.2019
(73) Titulaire: Safran Landing Systems, 78140 Vélizy-Villacoublay (FR)
(72) Inventeur: ZABULON, Joël, 78140 VELIZY-VILLACOUBLAY (FR); FRANK, David, 78140 VELIZY-VILLACOUBLAY (FR)
(74) Mandataire: Lavaud, Thomas

(56) Documents cités:
- EP-A1- 2 196 908
- EP-A1- 2 719 592
- EP-A1- 3 000 729
- WO-A1-2004/005938
- US-A1- 2010 117 447

## Description

L'invention concerne le domaine des dispositifs de mesure des vitesses de rotation de roues d'atterrisseur d'aéronef.

### ARRIERE PLAN DE L'INVENTION

Un système de freinage moderne de roues d'atterrisseur d'aéronef met classiquement en œuvre une fonction d'antipatinage des roues sur lesquelles le freinage est appliqué (on parle de « roues freinées »).

La fonction d'antipatinage vise à détecter un début de blocage des roues freinées et à adapter le freinage pour éviter ce blocage.

Le système de freinage comporte, pour chaque roue freinée, un tachymètre qui mesure une vitesse de rotation de la roue freinée. La mesure de vitesse de rotation est utilisée pour détecter un début de blocage de ladite roue freinée.

Un tachymètre traditionnel de roue freinée d'aéronef comprend un capteur passif, par exemple un capteur à reluctance variable. Le capteur passif comporte ainsi une bobine aux bornes de laquelle est induite une tension de mesure représentative de la vitesse de rotation de la roue.

On tente d'améliorer la précision de la mesure de vitesse de rotation de la roue et la sensibilité à basse vitesse de la mesure en utilisant un capteur actif, par exemple un capteur à effet Hall. Comme le fonctionnement du capteur actif nécessite une alimentation électrique, on tente aussi de profiter de la disponibilité de cette alimentation électrique pour équiper le tachymètre de fonctions additionnelles : numérisation de mesures de vitesse de rotation, filtrage, traitement, transmission des mesures numériques via un bus numérique, etc.

Cependant, ces fonctions additionnelles nécessitent l'utilisation de composants additionnels qui sont plus sensibles que les composants passifs du tachymètre traditionnel à l'environnement contraignant du bas de l'atterrisseur, et notamment aux contraintes mécaniques et aux cycles de température et d'humidité.

Les fonctions additionnelles ont donc tendance à réduire la fiabilité du tachymètre. Or, la perte d'un tachymètre d'une roue freinée est très problématique, car elle a pour conséquence l'inhibition de la fonction d'antipatinage associée à la roue freinée.

Selon EP-A-3000729 la vitesse de rotation d'une roue dans un atterrisseur d'aéronef peut être déterminée avec une unité de mesure reliée à une unité de traitement associée à cette roue.

Selon EP-A-2196908 un système électronique peut comprendre au moins deux unités de traitement et deux cartes d'acquisition de signaux délivrés par au moins un capteur. Chaque unité de traitement et chaque carte d'acquisition a deux ports de communication, les connexions étant reconfigurables pour obtenir un bus de communication comportant une unité de traitement fonctionnel et toutes les cartes d'une des deux chaînes redondantes de cartes d'acquisition. Les unités ne sont pas associées à des roues d'un atterrisseur d'aéronef.

### OBJET DE L'INVENTION

L'invention a pour objet d'améliorer la fiabilité de la fonction d'antipatinage.

### RESUME DE L'INVENTION

En vue de la réalisation de ce but, on propose un dispositif de mesure de vitesses de rotation d'au moins deux roues d'un atterrisseur d'aéronef, comportant une unité de mesure et une unité de traitement associées à chaque roue, l'unité de mesure de chaque roue étant agencée pour transformer une vitesse de rotation de la roue en une grandeur électrique, l'unité de traitement de chaque roue étant agencée pour acquérir les grandeurs électriques produites par les deux unités de mesure, pour transformer les grandeurs électriques en signaux numériques de mesure représentatifs des vitesses de rotation des deux roues, et pour transmettre les signaux numériques de mesure à un équipement externe.

Ainsi, les grandeurs électriques représentatives des vitesses de rotation des deux roues sont acquises par deux unités de traitement distinctes. Une défaillance de l'une des deux unités de traitement ne mène donc pas à la perte de la fonction d'antipatinage pour la roue associée à l'unité de traitement défaillante. On améliore ainsi de manière très significative la fiabilité de la fonction d'antipatinage.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 représente deux roues freinées d'un atterrisseur d'un aéronef et un dispositif de mesure selon un premier mode de réalisation de l'invention ;
- la figure 2 représente une unité de mesure du dispositif de mesure selon un premier mode de réalisation de l'invention
- la figure 3 représente une unité de mesure et une unité de traitement associée à une roue, et une unité de mesure associée à une autre roue ;
- la figure 4 représente deux roues freinées d'un atterrisseur d'un aéronef et un dispositif de mesure selon un deuxième mode de réalisation de l'invention ;
- la figure 5 représente une unité de mesure et une unité de traitement associée à une roue, et une unité de traitement associée à une autre roue.

### DESCRIPTION DETAILLEE DE L'INVENTION

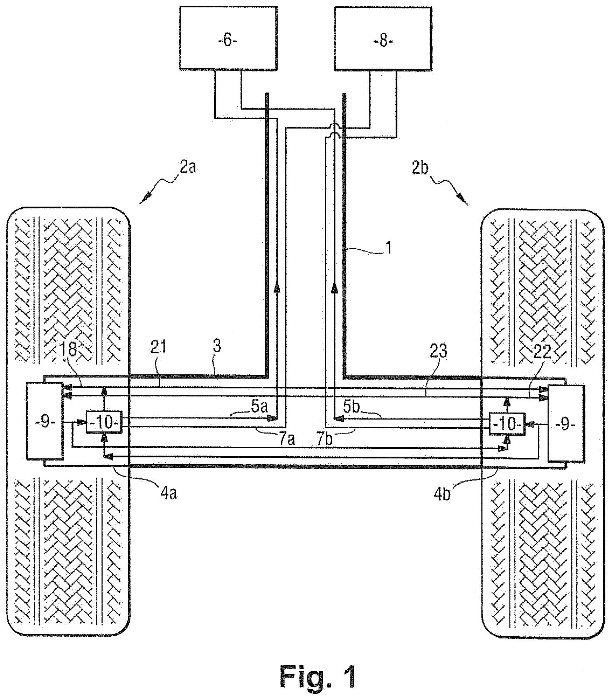

En référence à la figure 1, l'invention est ici mise en œuvre sur un atterrisseur 1 d'un aéronef comprenant une première roue 2a et une deuxième roue 2b montées en regard l'une de l'autre autour d'un même essieu 3.

La première roue 2a et la deuxième roue 2b sont des roues freinées. La première roue 2a et la deuxième roue 2b comportent ainsi chacune un frein destiné à freiner la roue.

Le frein de chaque roue 2 est ici un frein dit « électrique ». Le frein comporte un porte-actionneurs sur lequel sont montés des actionneurs électromécaniques de freinage, et des organes de friction, en l'occurrence une pile de disques de carbone.

Les actionneurs électromécaniques de freinage sont utilisés pour appliquer un effort de freinage sur la pile de disques de carbone et exercer ainsi un couple de freinage sur la roue 2 qui ralentit la rotation de la roue 2 et donc freine l'aéronef lorsque celui-ci est au sol.

La première roue 2a est équipée d'un premier tachymètre 4a, et la deuxième roue 2b est équipée d'un deuxième tachymètre 4b.

Le premier tachymètre 4a est relié par un premier bus numérique 5a à un équipement externe, en l'occurrence à un calculateur 6 situé dans le fuselage de l'aéronef. Le deuxième tachymètre 4b est relié par un deuxième bus numérique 5b au calculateur 6.

Le premier tachymètre 4a est relié par un premier câble de puissance 7a à une unité d'alimentation 8 située dans le fuselage de l'aéronef. Le deuxième tachymètre 4b est relié par un deuxième câble de puissance 7b à l'unité d'alimentation 8.

Les bus numériques 5 et les câbles de puissance 7 cheminent partiellement le long d'une jambe de l'atterrisseur 1.

Le premier tachymètre 4a comporte une unité de mesure 9 et une unité de traitement 10, qui sont donc associées à la première roue 2a.

L'unité de mesure 9 comporte un capteur actif, ici un capteur à effet Hall.

L'unité de traitement 10 comporte quant à elle un convertisseur analogique-numérique, un composant de traitement, un composant d'alimentation et un composant de communication. Le composant de traitement est ici un microcontrôleur, mais pourrait être un composant différent, par exemple un processeur, un FPGA, un ASIC, etc.

Le deuxième tachymètre 4b comporte une unité de mesure 9 et une unité de traitement 10 semblables à celles du premier tachymètre 4a, qui sont donc associées à la deuxième roue 2b.

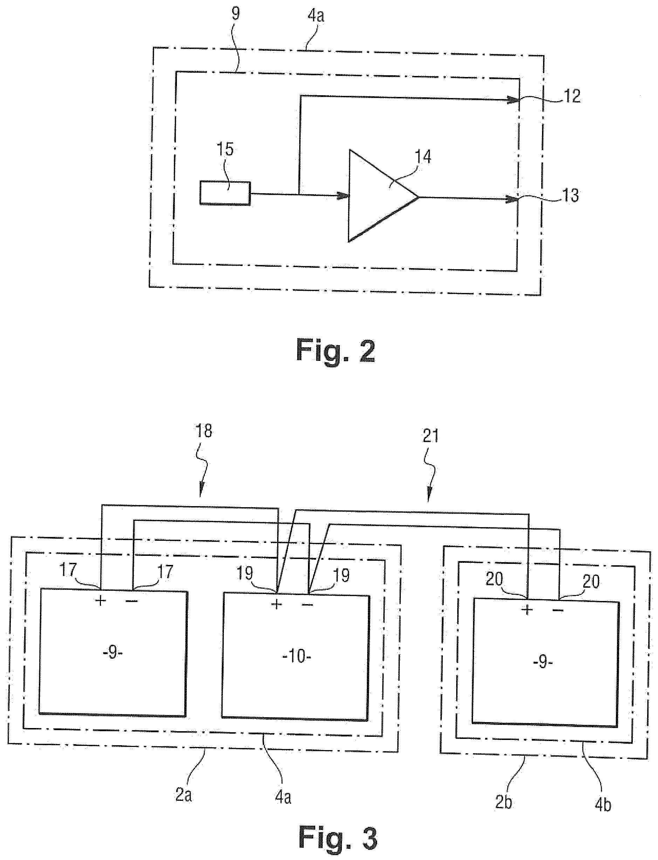

En référence à la figure 2, l'unité de mesure 9 de la première roue 2a (c'est à dire du premier tachymètre 4a) comporte en outre une première sortie de mesure 12, une deuxième sortie de mesure 13 et un amplificateur 14. Le capteur à effet Hall 15 de l'unité de mesure 9 de la première roue 2a est relié à l'unité de traitement 10 de la première roue 2a via la première sortie de mesure 12 et à l'unité de traitement 10 de la deuxième roue 2b (c'est à dire du deuxième tachymètre 4b) via l'amplificateur 14 et la deuxième sortie de mesure 13.

De même, l'unité de mesure 9 de la deuxième roue 2b (c'est à dire du deuxième tachymètre) comporte une première sortie de mesure, une deuxième sortie de mesure et un amplificateur. Le capteur à effet Hall de l'unité de mesure 9 de la deuxième roue 2b est relié à l'unité de traitement 10 de la deuxième roue 2b via la première sortie de mesure et à l'unité de traitement 10 de la première roue 2a via l'amplificateur et la deuxième sortie de mesure.

Les amplificateurs permettent de compenser une différence de chemin entre un capteur à effet Hall et chaque unité de traitement 10. On évite ainsi une pollution du signal de sortie du capteur à effet Hall (appelé plus bas « tension de mesure »), susceptible de se produire lorsque le signal de sortie est de faible amplitude, typiquement inférieure à 1V.

En référence à la figure 3, l'unité de mesure 9 de la première roue 2a comporte deux ports d'alimentation 17, qui sont reliés par un premier câble d'alimentation 18 à deux ports d'alimentation 19 de l'unité de traitement 10 de la première roue 2a. L'unité de mesure 9 de la deuxième roue 2b comporte deux ports d'alimentation 20, qui sont reliés par un deuxième câble d'alimentation 21 aux deux ports d'alimentation 19 de l'unité de traitement 10 de la première roue 2a. Le premier câble d'alimentation 18 et le deuxième câble d'alimentation 21 comprennent chacun deux conducteurs (ou fils électriques).

Dans les unités de mesure 9 et l'unité de traitement 10 qui viennent d'être évoquées, chaque ensemble 17, 19 et 20 de deux ports d'alimentation comprend un port d'alimentation positif (c'est à dire qu'un potentiel positif est appliqué sur le port d'alimentation positif) et un port d'alimentation négatif (c'est à dire qu'un potentiel négatif ou nul est appliqué sur le port d'alimentation positif).

De même, l'unité de mesure 9 de la deuxième roue 2b comporte deux ports d'alimentation, qui sont reliés par un troisième câble d'alimentation 22 (visible sur la figure 1) à deux ports d'alimentation de l'unité de traitement 10 de la deuxième roue 2b. L'unité de mesure 9 de la première roue 2a comporte deux ports d'alimentation, qui sont reliés par un quatrième câble d'alimentation 23 aux deux ports d'alimentation de l'unité de traitement 10 de la deuxième roue 2b.

Dans les unités de mesure 9 et l'unité de traitement 10 qui viennent d'être évoquées, chaque ensemble de deux ports d'alimentation comprend un port d'alimentation positif et un port d'alimentation négatif.

On décrit maintenant le fonctionnement du dispositif de mesure selon le premier mode de réalisation.

L'unité de traitement 10 de la première roue 2a et l'unité de traitement 10 de la deuxième roue 2b reçoivent chacune une tension d'alimentation générale de l'unité d'alimentation 8, via respectivement le premier câble de puissance 7a et le deuxième câble de puissance 7b.

Le composant d'alimentation de l'unité de traitement 10 de la première roue 2a transforme la tension d'alimentation générale en une tension d'alimentation que l'unité de traitement 10 utilise pour sa propre alimentation, mais aussi pour alimenter l'unité de mesure 9 de la première roue 2a, et notamment le capteur à effet Hall, via le premier câble d'alimentation 18.

En cas de défaillance de l'unité de traitement 10 de la deuxième roue 2b, l'unité de traitement 10 de la première roue 2a peut aussi alimenter l'unité de mesure 9 de la deuxième roue 2b via le deuxième câble d'alimentation 21.

De même, le composant d'alimentation de l'unité de traitement 10 de la deuxième roue 2b transforme la tension d'alimentation générale en une tension d'alimentation que l'unité de traitement 10 utilise pour sa propre alimentation, mais aussi pour alimenter l'unité de mesure 9 de la deuxième roue 2b, et notamment son capteur à effet Hall, via le troisième câble d'alimentation 22.

En cas de défaillance de l'unité de traitement 10 de la première roue 2a, l'unité de traitement 10 de la deuxième roue 2b peut aussi alimenter l'unité de mesure 9 de la première roue 2a via le quatrième câble d'alimentation 23.

Ainsi, une défaillance de l'une des deux unités de traitement 10 n'empêche pas l'alimentation de l'unité de mesure 9 reliée à l'unité de traitement 10 défaillante, et n'entraîne donc pas de perte de la fonction d'antipatinage pour la roue 2 à laquelle est associée l'unité de traitement 10 défaillante.

Le capteur à effet Hall de l'unité de mesure 9 de la première roue 2a transforme une vitesse de rotation de la première roue 2a en une grandeur électrique, en l'occurrence en une première tension de mesure. De même, le capteur à effet Hall de l'unité de mesure 9 de la deuxième roue 2b transforme une vitesse de rotation de la deuxième roue 2b en une grandeur électrique, en l'occurrence en une deuxième tension de mesure.

L'unité de traitement 10 de la première roue 2a acquiert la première tension de mesure et la deuxième tension de mesure (via l'amplificateur de l'unité de mesure 9 de la deuxième roue 2b).

Le convertisseur analogique-numérique de l'unité de traitement 10 de la première roue 2a numérise la première tension de mesure et la deuxième tension de mesure pour obtenir des signaux numériques de mesure représentatifs des vitesses de rotation de la première roue 2a et de la deuxième roue 2b. Le composant de traitement réalise éventuellement des traitements sur les signaux numériques de mesure. Les traitements comprennent par exemple un filtrage, une transformation des tensions de mesure en vitesse de rotation des roues 2, et des traitements quelconques. Les traitements quelconques comprennent par exemple des traitements en vue de la génération d'un courant d'antipatinage destiné à alimenter les actionneurs électromécaniques de freinage de l'un des freins ou des deux freins pour éviter le blocage d'une roue 2 ou des deux roues 2.

Le composant de communication de l'unité de traitement 10 de la première roue 2b transmet au calculateur 6, via le premier bus de communication 5a, les signaux numériques de mesure, qui sont bruts ou traités. Les signaux numériques de mesure bruts sont directement issus de la conversion analogique numérique, alors que les signaux numériques de mesure traités sont issus des traitements réalisés par le composant de traitement.

De même, le convertisseur analogique-numérique de l'unité de traitement 10 de la deuxième roue 2b numérise la deuxième tension de mesure et la première tension de mesure pour obtenir des signaux numériques de mesure représentatifs des vitesses de rotation de la deuxième roue 2b et de la première roue 2a. Le composant de traitement réalise éventuellement des traitements sur les signaux numériques de mesure.

Le composant de communication de l'unité de traitement 10 de la deuxième roue 2b transmet au calculateur 6, via le deuxième bus de communication 5b, les signaux numériques de mesure (bruts ou traités).

Ainsi, une défaillance de l'une des deux unités de traitement 10 n'empêche pas la transmission des signaux numériques de mesure produits par l'unité de mesure 9 reliée à l'unité de traitement 10 défaillante.

Le dispositif de mesure selon le premier mode de réalisation de l'invention apporte un gain de fiabilité très important. En effet, dans chaque tachymètre 4, le taux de défaillance de l'unité de mesure 9 est nettement inférieur à celui de l'unité de traitement 10, car ses composants sont plus simples. L'utilisation de deux unités de traitement 10 pour alimenter chaque unité de mesure 9 et pour transmettre les signaux numériques de mesure via les bus numériques 5 permet quasiment de doubler le MTCBF (pour *Mean Time Between Critical Failure*) du dispositif de mesure.

Le MTCBF est considéré ici comme étant un temps moyen avant que ne survienne une défaillance conduisant à une perte totale du dispositif de mesure pour une roue 2.

Ainsi, si λ1 est le taux de défaillance de l'unité de mesure 9 et λ2 est le taux de défaillance de l'unité de traitement 10, on a :
λ1<<λ2.

Le taux de défaillance d'un tachymètre est :
λ =λ1+λ2∼λ2.

Dans le cas du dispositif de mesure selon le premier mode de réalisation de l'invention, et de l'utilisation décrite des unités de mesure 9 et des unités de traitement 10, on a, pour chaque tachymètre 4 : λ=λ1+λ2/2∼λ2/2.

Le MTCBF est donc quasiment doublé.

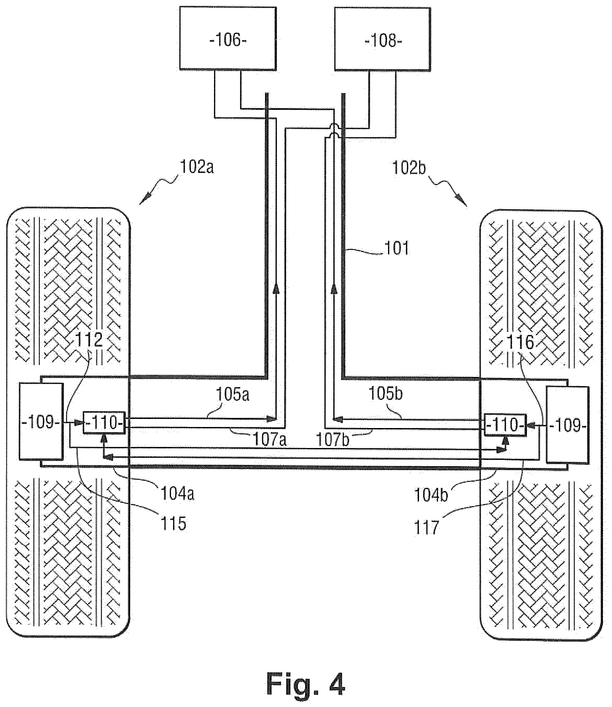

En référence à la figure 4, un dispositif de mesure selon un deuxième mode de réalisation de l'invention comporte à nouveau un premier tachymètre 104a et un deuxième tachymètre 104b, qui chacun comprennent une unité de mesure 109 et une unité de traitement 110.

Cette fois, chaque unité de mesure 109 comprend un capteur passif, qui est en l'occurrence un capteur à reluctance variable.

Les capteurs à reluctance variable ne nécessitent pas d'être alimentés, ce qui explique pourquoi des câbles équivalents aux câbles 18, 21, 22, 23 ne sont pas visibles sur la figure 4.

Les unités de mesure 109 ne comportent pas d'amplificateur, car les capteurs passifs sont capables de délivrer des signaux à des équipements situés à plusieurs mètres. Ainsi, l'unité de traitement 110 de la première roue 102a peut acquérir la deuxième tension de mesure produite par le capteur à reluctance variable du deuxième tachymètre 104b sans qu'un amplificateur ne soit nécessaire dans l'unité de mesure 109 du deuxième tachymètre 104b, et l'unité de traitement 110 de la deuxième roue 102b peut acquérir la première tension de mesure produite par le capteur à reluctance variable du premier tachymètre 104a sans qu'un amplificateur ne soit nécessaire dans l'unité de mesure 109 du premier tachymètre 104a.

Il convient cependant d'éviter les désadaptations de ligne. Le câblage entre les unités de mesure 109 et les unités de traitement 110 est réalisé dans ce but de la manière qui suit.

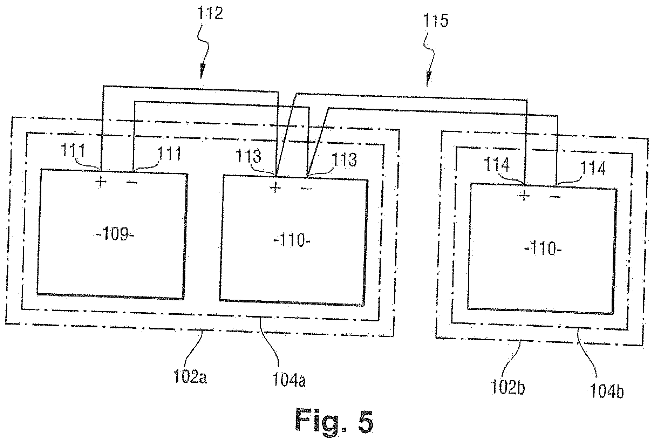

En référence à la figure 5, l'unité de mesure 109 de la première roue 102a comporte deux ports de mesure 111, qui sont reliés par un premier câble de mesure 112 à deux ports de mesure 113 de l'unité de traitement 110 de la première roue 102a. L'unité de traitement 110 de la deuxième roue 102b comporte deux ports de mesure 114, qui sont reliés par un deuxième câble de mesure 115 aux deux ports de mesure de l'unité de traitement 110 de la première roue 102a.

Le premier câble de mesure 112 et le deuxième câble de mesure 115 comprennent chacun deux conducteurs.

Dans l'unité de mesure 109 et les unités de traitement 110 qui viennent d'être évoquées, chaque ensemble 111, 113, 114 de deux ports de mesure comprend un port de mesure positif (c'est à dire qu'un potentiel positif est appliqué sur le port de mesure positif) et un port de mesure négatif (c'est à dire qu'un potentiel négatif ou nul est appliqué sur le port de mesure négatif).

De même, l'unité de mesure 109 de la deuxième roue 102b comporte deux ports de mesure, qui sont reliés par un troisième câble de mesure 116 à deux ports de mesure de l'unité de traitement 110 de la deuxième roue 102b. L'unité de traitement 110 de la première roue 102a comporte deux ports de mesure, qui sont reliés par un quatrième câble de mesure 117 aux deux ports de mesure de l'unité de traitement 110 de la deuxième roue 102b.

Le troisième câble de mesure 116 et le quatrième câble de mesure 117 comprennent chacun deux conducteurs.

Dans l'unité de mesure 109 et les unités de traitement 110 qui viennent d'être évoquées, chaque ensemble de deux ports de mesure comprennent un port de mesure positif (c'est à dire qu'un potentiel positif est appliqué sur le port de mesure positif) et un port de mesure négatif (c'est à dire qu'un potentiel négatif ou nul est appliqué sur le port de mesure négatif).

L'unité de traitement 110 de la première roue 102a acquiert ainsi la première tension de mesure via le premier câble de mesure 112 et la deuxième tension de mesure via le quatrième câble de mesure 117. L'unité de traitement 110 de la deuxième roue 102b acquiert ainsi la deuxième tension de mesure via le troisième câble de mesure 116 et la première tension de mesure via le deuxième câble de mesure 115.

Le composant de communication de l'unité de traitement 110 de la première roue 102a transmet au calculateur 106, via le premier bus de communication 105a, les signaux numériques de mesure issus de la première tension de mesure et de la deuxième tension de mesure.

Le composant de communication de l'unité de traitement 110 de la deuxième roue 102b transmet au calculateur 106, via le deuxième bus de communication 105b, les signaux numériques de mesure issus de la deuxième tension de mesure et de la première tension de mesure.

Le gain en matière de fiabilité est donc identique que pour le dispositif de mesure selon le premier mode de réalisation de l'invention.

Bien entendu, l'invention n'est pas limitée aux modes de réalisation décrits mais englobe toute variante entrant dans le champ de l'invention telle que définie par les revendications.

Les freins décrits ici sont des freins électriques. L'invention s'applique cependant à tout type de frein, notamment aux freins hydrauliques.

Un dispositif de mesure selon l'invention peut être mis en œuvre sur un nombre de roues différent, supérieur ou égal à deux. Dans ce cas, chaque unité de traitement est agencée pour acquérir les grandeurs électriques produites par au moins deux unités de mesure.

L'invention peut être mise en œuvre dans une architecture de système de freinage différente. En particulier, les tachymètres de deux roues peuvent ne pas être reliés à un même calculateur et à une même unité d'alimentation, le calculateur et l'unité d'alimentation peuvent être intégrés dans un même équipement électrique, un même calculateur peut, tout comme une même unité de d'alimentation, être relié à un nombre quelconque de roues freinées d'un ou de plusieurs atterrisseurs, etc.

On a indiqué ici que le capteur actif est un capteur à effet Hall. Tout type de capteur alimenté fournissant une grandeur électrique représentative de la mesure pourrait être utilisé. On pourrait ainsi utiliser par exemple un capteur optique, un capteur magnétorésistif de type GMR (pour *Giant MagnetoResistance,* ou magnétorésistance géante) ou un capteur à courant de Foucault.

## Revendications

1. Dispositif de mesure de vitesses de rotation d'au moins deux roues (2a, 2b ; 102a, 102b) d'un atterrisseur (1 ; 101) d'aéronef, comportant une unité de mesure (9 ; 109) et une unité de traitement (10 ; 110) associées à chaque roue, l'unité de mesure de chaque roue étant agencée pour transformer une vitesse de rotation de la roue en une grandeur électrique, l'unité de traitement de chaque roue étant agencée pour acquérir les grandeurs électriques produites par les deux unités de mesure, pour transformer les grandeurs électriques en signaux numériques de mesure représentatifs des vitesses de rotation des deux roues, et pour transmettre les signaux numériques de mesure à un équipement externe (6 ; 106).

2. Dispositif de mesure selon la revendication 1, dans lequel chaque unité de mesure (9) comporte un capteur actif, et dans lequel chaque unité de traitement (10) est agencée pour alimenter les capteurs actifs des deux unités de mesure.

3. Dispositif de mesure selon la revendication 2, dans lequel, pour chaque roue, l'unité de mesure de ladite roue comporte une première sortie de mesure (12), une deuxième sortie de mesure (13) et un amplificateur (14), le capteur actif (15) de l'unité de mesure de ladite roue étant relié à l'unité de traitement de ladite roue via la première sortie de mesure et à l'unité de traitement de l'autre roue via l'amplificateur et la deuxième sortie de mesure.

4. Dispositif de mesure selon la revendication 2, dans lequel, pour chaque roue, l'unité de mesure de ladite roue est reliée par un premier câble d'alimentation (18, 22) à deux ports d'alimentation de l'unité de traitement de ladite roue, dans lequel l'unité de mesure de l'autre roue est reliée par un deuxième câble d'alimentation (21, 23) aux deux ports d'alimentation de l'unité de traitement de ladite roue, et dans lequel l'unité de traitement de ladite roue est agencée pour alimenter l'unité de mesure de ladite roue via le premier câble d'alimentation et l'unité de mesure de l'autre roue via le deuxième câble d'alimentation.

5. Dispositif de mesure selon la revendication 2, dans lequel le capteur actif est un capteur à effet Hall.

6. Dispositif de mesure selon la revendication 1, dans lequel chaque unité de mesure (109) comporte un capteur passif, dans lequel, pour chaque roue, l'unité de mesure de ladite roue est reliée par un premier câble de mesure (112, 116) à deux ports de mesure de l'unité de traitement de ladite roue, dans lequel l'unité de traitement de l'autre roue est reliée par un deuxième câble de mesure (115, 117) aux deux ports de mesure de l'unité de traitement de ladite roue, et dans lequel la grandeur électrique de l'unité de mesure de ladite roue est acquise par l'unité de traitement de ladite roue via le premier câble de mesure et par l'unité de traitement de l'autre roue via le deuxième câble de mesure.

7. Dispositif de mesure selon la revendication 6, dans lequel le capteur passif est un capteur à reluctance variable.

## Patentansprüche

1. Messvorrichtung zum Messen der Drehgeschwindigkeiten mindestens zweier Räder (2a, 2b; 102a, 102b) eines Luftfahrzeugfahrwerks (1; 101), umfassend eine Messeinheit (9; 109) und eine Verarbeitungseinheit (10; 110), die jedem Rad zugeordnet sind, wobei die Messeinheit jedes Rades so ausgebildet ist, dass sie eine Drehgeschwindigkeit des Rades in eine elektrische Größe umwandelt, wobei die Verarbeitungseinheit jedes Rades so ausgebildet ist, dass sie die von den beiden Messeinheiten erzeugten elektrischen Größen erfasst, dass sie die elektrischen Größen in digitale Messsignale umwandelt, die repräsentativ für die Drehgeschwindigkeiten der beiden Räder sind, und dass sie die digitalen Messsignale an ein externes Gerät (6; 106) überträgt.

2. Messvorrichtung nach Anspruch 1, bei der jede Messeinheit (9) einen aktiven Sensor umfasst und bei der jede Verarbeitungseinheit (10) so ausgebildet ist, dass sie die aktiven Sensoren der beiden Messeinheiten versorgt.

3. Messvorrichtung nach Anspruch 2, bei der für jedes Rad die Messeinheit des genannten Rades einen ersten Messausgang (12), einen zweiten Messausgang (13) und einen Verstärker (14) umfasst, wobei der aktive Sensor (15) der Messeinheit des genannten Rades mit der Verarbeitungseinheit des genannten Rades über den ersten Messausgang und mit der Verarbeitungseinheit des anderen Rades über den Verstärker und den zweiten Messausgang verbunden ist.

4. Messvorrichtung nach Anspruch 2, bei der für jedes Rad die Messeinheit des genannten Rades über ein erstes Versorgungskabel (18, 22) mit zwei Versorgungsanschlüssen der Verarbeitungseinheit des genannten Rades verbunden ist, bei der die Messeinheit des anderen Rades über ein zweites Versorgungskabel (21, 23) mit den zwei Versorgungsanschlüssen der Verarbeitungseinheit des genannten Rades verbunden ist, und bei der die Verarbeitungseinheit des genannten Rades so ausgebildet ist, dass sie die Messeinheit des genannten Rades über das erste Versorgungskabel und die Messeinheit des anderen Rades über das zweite Versorgungskabel versorgt.

5. Messvorrichtung nach Anspruch 2, bei der der aktive Sensor ein Hall-Effekt-Sensor ist.

6. Messvorrichtung nach Anspruch 1, bei der jede Messeinheit (109) einen passiven Sensor umfasst, bei der für jedes Rad die Messeinheit des genannten Rades durch ein erstes Messkabel (112, 116) mit zwei Messanschlüssen der Verarbeitungseinheit des genannten Rades verbunden ist, bei der die Verarbeitungseinheit des anderen Rades durch ein zweites Messkabel (115, 117) mit den zwei Messanschlüssen der Verarbeitungseinheit des genannten Rades verbunden ist, und bei der die elektrische Größe der Messeinheit des genannten Rades durch die Verarbeitungseinheit des genannten Rades über das erste Messkabel und durch die Verarbeitungseinheit des anderen Rades über das zweite Messkabel erfasst wird.

7. Messvorrichtung nach Anspruch 6, bei der der passive Sensor ein Sensor mit variabler Reluktanz ist.

## Claims

1. A measurement device for measuring speeds of rotation of at least two wheels (2a, 2b; 102a, 102b) of an aircraft undercarriage (1; 101), the device comprising a measurement unit (9; 109) and a processor unit (10; 110) associated with each wheel, the measurement unit of each wheel being arranged to transform a speed of rotation of the wheel into an electrical magnitude, the processor unit of each wheel being arranged to acquire the electrical magnitudes produced by the two measurement units, to transform the electrical magnitudes into digital measurement signals representative of the speeds of rotation of the two wheels, and to transmit the digital measurement signals to an external equipment (6; 106) .

2. A measurement device according to claim 1, wherein each measurement unit (9) includes an active sensor, and wherein each processor unit (10) is arranged to power the active sensors of both measurement units.

3. A measurement device according to claim 2, wherein, for each wheel, the measurement unit of that wheel includes a first measurement output (12), a second measurement output (13), and an amplifier (14), the active sensor (15) of the measurement unit of said wheel being connected to the processor unit of said wheel via the first measurement output and to the processor unit of the other wheel via the amplifier and the second measurement output.

4. A measurement device according to claim 2, wherein, for each wheel, the measurement unit of said wheel is connected by a first power supply cable (18, 22) to two power supply ports of the processor unit of said wheel, wherein the measurement unit of the other wheel is connected by a second power supply cable (21, 23) to the two power supply ports of the other processor unit of said wheel, and wherein the processor unit of said wheel is arranged to power the measurement unit of said wheel via the first power supply cable and the measurement unit of the other wheel via the second power supply cable.

5. A measurement device according to claim 2, wherein the active sensor is a Hall effect sensor.

6. A measurement device according to claim 1, wherein each measurement unit (109) comprises a passive sensor, wherein, for each wheel, the measurement unit of said wheel is connected by a first measurement cable (112, 116) to two measurement ports of the processor unit of said wheel, wherein the processor unit of the other wheel is connected by a second measurement cable (115, 117) to the two measurement ports of the processor unit of said wheel, and wherein the electrical magnitude from the measurement unit of said wheel is acquired by the processor unit of said wheel via the first measurement cable and by the processor unit of the other wheel via the second measurement cable.

7. A measurement device according to claim 6, wherein the passive sensor is a variable reluctance sensor.
